# EUROPEAN PATENT APPLICATION

(11) **EP 1 388 374 A1**
(43) Date of publication of application: **11.02.2004**
(21) Application number: 02708724.6
(22) Date of filing: 29.03.2002
(51) Int. Cl.: B05D 5/00

(54) **METHOD OF FINISHING WITH HEAT INSULATION COATING**

(30) Priority: 13.04.2001 JP 2001115483
(71) Applicant: KANSAI PAINT CO., LTD., Amagasaki-shi Hyogo 661-0964 (JP)
(72) Inventor: ISHIHARA, Yushichi, Kansai Paint Co, . Ltd., Hiratsuka-shi, Kanagawa 254-0016 (JP); ITOH, Hitoshi, Kansai Paint Co., Ltd., Hiratsuka-shi, Kanagawa 254-0016 (JP); SUGISHIMA, Masami, Kansai Paint Co., Ltd., Hiratsuka-shi, Kanagawa 254-0016 (JP)
(74) Representative: Stuart, Ian Alexander
(86) International application number: PCT/JP2002/003175
(87) International publication number: WO 2002/083326

(57) **Abstract**

The present invention relates to a heat insulating finish coating method which comprises coating by at least one coating a heat insulating coating material by use of (I) a porous-shaped roller or (II) a spray coating gun having a nozzle bore diameter of 0.3 to 15 mm to form a thick film having an uneven coating surface, said heat insulating coating material containing (A) a resin emulsion, (B) a hollow bead having a mean particle size of 1 to 300 µm and (C) a thickening agent and having a viscosity of 2 to 100 Pa·s, said hollow bead (B) being contained in an amount of 20 to 98% by volume based on a solid content of the heat insulating coating material, said thickening agent (B) being contained in an amount of 0.01 to 5% by weight based on a solid content of the heat insulating coating material.

## Description

### Field of the Invention:

The present invention relates to a heat insulating finish coating method capable of forming a heat insulating coating film showing good properties in thick coating properties and beautiful appearance.

### Background Art:

It has widely been carried out in the art to apply a heat insulating component such as a polystyrene foam, glass wool and the like as a face component onto both internal and external surfaces of a building wall for the purpose of controlling temperature changes in the interior of an architectural structure. On the other hand, a heat insulating properties-imparting coating material, which uses an inorganic or organic fine foam or fine hollow foam as an aggregate, is known in the art. Proposed heat insulating properties-imparting coating materials may include, for example, heat insulating coating material containing resin foam particles (see Japanese Patent Application Laid-Open Nos. 94470/85, 123362/99, 90328/99, 73001/00, etc.).

The above heat insulating coating materials are such that a coating film showing heat insulating properties may be formed, but a generally large particle size may make it difficult to impart a beautiful appearance onto a coating surface, resulting in that a development of a heat insulating coating method capable of easily imparting beautiful appearance has been demanded.

### Disclosure of the Invention:

The present inventors made intensive studies for the purpose of solving the above problems to find out that coating of a specified heat insulating coating material containing a hollow bead by a specified coating method makes it possible to form a coating surface showing heat insulating properties and highly beautiful appearance having a ripple-like largely uneven pattern, resulting in accomplishing the present invention.

That is, the present invention relates to a heat insulating finish coating method which comprises coating by at least one coating a heat insulating coating material by use of (I) a porous-shaped roller or (II) a spray coating gun having a nozzle bore diameter of 0.3 to 15 mm to form a thick film having an uneven coating surface, said heat insulating coating material containing (A) a resin emulsion, (B) a hollow bead having a mean particle size of 1 to 300 µm and (C) a thickening agent and having a viscosity of 2 to 100 Pa·s, said hollow bead (B) being contained in an amount of 20 to 98% by volume based on a solid content of the heat insulating coating material, said thickening agent (B) being contained in an amount of 0.01 to 5% by weight based on a solid content of the heat insulating coating material,
2. A heat insulating finish coating method as the above method 1, wherein the hollow bead (B) is a resin balloon,
3. A heat insulating coating material used in the heat insulating finish coating method as in the above method 1 or 2,
4. A heat insulating coating material as in the above method 3, wherein the heat insulating coating material further contains a flame retardant.

The resin emulsion (A) used in the method of the present invention may include any ones known in the art without limitations, for example, acrylic resin, vinyl acetate resin, vinyl chloride resin, styrene·butadiene resin, epoxy resin, alkyd resin, polyester resin, silicone resin, fluorocarbon resin, polyurethane resin, acryl urethane resin including two pack type ones, and the like. These may be used alone or in combination. Particularly, the resin emulsion (A) may preferably include, as a crosslinkable one, a (co)polymer prepared by subjecting at least one vinyl monomer selected from the group consisting of (meth)acrylic alkyl ester, styrene, vinyl acetate, unsaturated acid and the like to an emulsion polymerization; and, as a crosslinkable one, a crosslinkable emulsion (see, for example, Japanese Patent Application Laid-Open No. 249587/92) containing a carbonyl group-containing acrylic (co)polymer and a hydrazine compound, and a combination (see, for example, Japanese Patent Application Laid-Open No. 339542/93) of the above emulsion with a water based polyurethane resin, from the standpoint of drying properties.

The hollow bead (B) used in the method of the present invention may be used for the purpose of imparting heat insulating properties to a coating film formed by the coating method of the present invention. The hollow bead (B) has a hollow within a thin shell, and usually may be called as a balloon. The hollow may be encapsulated with a gas such as air, as the case may be, under reduced pressure or under vacuum. Depending on the kind of a shell material, an inorganic balloon and resin balloon are known in the art. The hollow bead (B) in the present invention may preferably include the resin balloon having good heat insulating properties. The shell material may include various kinds of resins. The resin may include homopolymer and copolymer of monomers selected from, for example, acrylonitrile, acrylamide, acrylic acid, acrylic ester, methacrylonitrile, methacrylamide, methacrylic acid, methacrylic ester, vinyl chloride, vinylidene chloride and the like. A suitable crosslinking agent such as divinylbenzene, (poly)ethylene glycol (di)methacrylate, triallylisocyanurate, trimethylolpropane trimethacrylate, triacrylformal and the like, may be added to the above resin in a small amount.

The inorganic balloon may include, for example, glassballoons, Shirasuballoons, aluminaballoons, zirconiaballoons, aluminosilicate balloons and the like, and these may be used alone or in combination. The resin balloon and the inorganic balloon may arbitrarily be combined to be used.

The surface of the hollow bead (B) may arbitrarily be coated with an organic substance, inorganic substance, pigment, and the like for the purpose of improving dispersibility and opacifying properties, or coloring and the like.

The hollow bead (B) may be in any forms, for example, sphere, flat sphere, scale and the like, and preferably has a mean particle size (longitudinal diameter) in the range of 1 to 300 µm, preferably 1 to 280 µm, more preferably 1 to 250 µm. A mean particle size (longitudinal diameter) less than 1 µm may reduce a hollow volume percentage of the particle, resulting in reduction of heat insulating properties. On the other hand, when more than 300 µm, the hollow bead (B) becomes too large, so that clogging may take place on roller coating or spray coating. In the present invention, two or more hollow beads having a different mean particle size from each other may be used in combination.

A mixing amount of the hollow bead (B) in the present invention is preferably in the range of 20 to 98% by volume, preferably 35 to 95% by volume based on a solid content of the heat insulating coating material. A mixing amount less than 20% by volume of the hollow bead (B) may reduce heat insulating properties. When more than 98% by volume, a small amount of the resin emulsion (A) as a binder may reduce coating film strength, water resistance and the like. Mixing of the hollow bead (B) in the present invention provides such advantages that heat insulating properties are imparted to the coating film, and that a low specific gravity of the coating material may improve coating workability and thick coating properties.

The thickening agent (C) may be added for the purpose of preventing a flotation·sedimentation·separation of a coating material component such as the hollow bead (B) and the like by improving a viscosity of the coating material as a composition and by imparting a thixotropic viscosity characteristics to the coating material, and of imparting thick coating properties on coating.

The thickening agent (C) may specifically include, for example, inorganic thickening agent such as water-soluble alkali silicate, montmorillonite, organic montmorillonite, colloidal alumina and the like; cellulose derivative thickening agent such as methyl cellulose, hydroxyethyl cellulose, carboxymethyl cellulose, and the like; polyether thickening agent such as pluronic polyether, polyether dialkyl ester, polyether dialkyl ether, polyether urethane-modified product, polyether epoxy-modified product and the like; polyacrylic thickening agent such as sodium polyacrylate, polyacrylic acid-(meth)acrylate copolymer and the like; polyvinyl thickening agent such as polyvinyl alcohol, polyvinyl pyrrolidone, polyvinyl benzyl alcohol copolymer and the like; alginic thickening agent such as sodium alginate and the like; protein thickening agent such as soda casein, ammonium casein and the like; maleic anhydride copolymer thickening agent such as particle ester of vinyl methyl ether-maleic anhydride copolymer, half ester of a drying oil fatty acid allyl alcohol ester-maleic anhydride reaction product and the like, and the like. These may be used alone or in combination. Of these, the thickening agent (C) in the present invention may preferably include the cellulose derivative thickening agent, polyacrylic thickening agent, polyether thickening agent and the like, in that a finish properties having thick coating properties and uneven coating surface can be obtained.

A mixing amount of the thickening agent (C) is preferably such that an effective ingredient of the thickening agent (C) is in the range of 0.01 to 5% by weight, preferably 0.2 to 3% by weight based on the solid content of the heat insulating coating material. When less than 0.01% by weight, an unsatisfactory thickening effect may make it impossible to obtain the thick coating properties. When more than 5% by weight, a reduced water resistance may cause swelling, peeling off and the like.

The heat insulating coating material used in the present invention may optionally contain a pigment from the standpoints such as coloring, improvements in opacifying properties, coating film properties and in water resistance, etc. The pigment used may include any ones known in the art, for example, a color pigment such as titanium oxide, carbon black, phthalocyanine blue, iron oxide, and the like; an extender pigment such as clay, talc, mica, silica, calcium carbonate and the like, and the like. A mixing amount of the pigment may preferably be in the range of 0.01 to 30% by volume, preferably 0.01 to 20% by volume. A mixing amount of the pigment less than 0.01% by volume may result unsatisfactory opacifying properties. When more than 30% by volume, a resulting coating film may show poor properties in weather resistance and heat insulating properties. The carbon black may easily absorb heat of sunlight and may cause a temperature rise of a building. Particularly, in the case where the heat insulating coating material is used as a topcoat coating, carbon black may not preferably be used. The heat insulating coating material of the present invention may be used to obtain a deep paint finish preferably by obtaining a substractive color mixture formed by combining at least two color pigments, or by obtaining a low color value coating color formed by use of a specified black pigment. The black pigment may include, for example, an inorganic pigment such as Cu/Cr composite oxide, Cr/Fe composite oxide, Co/Cr/Fe composite oxide and the like; an organic pigment such as perylene black, azomethine, azo and the like.

The heat insulating coating material used in the present invention may preferably contain a flame retardant for the purpose of preventing catch fire and flame propagation on fire. The flame retardant may preferably include an organic flame retardant. An inorganic flame retardant may undesirably reduce heat insulating properties. The organic flame retardant may include, for example, a nitrogen based flame retardant such as guanidine sulfamate, melamine cyanurate, melem and the like; a phosphorus based flame retardant such as ammonium polyphosphate, melamine polyphosphate, tricresyl phosphate, triethyl phosphate, cresyl phenyl phosphate, xylenyl diphenyl phosphate, acid phosphate and the like; a bromine based flame retardant such as tetrabromobisphenol A, octabromodiphenyl oxide, decabromodiphenyl oxide, hexabromocyclododecane, tris(tribromoalkyl) phosphate and the like, and the like. These may be used alone or in combination. The flame retardant may also contain an assistant component such as antimony trioxide, antimony pentaoxide and the like.

A mixing amount of the retardant agent is suitably in the range of 2 to 80 parts by weight, preferably 5 to 70 parts by weight based on 100 parts by weight of a solid content of the resin. A mixing amount less than 2 parts by weight of the flame retardant may make it impossible to obtain a satisfactory flame retardant properties. On the other hand, a mixing amount more than 80 parts by weight may result a brittle coating film, and may reduce heat insulating properties.

The heat insulating coating material used in the present invention may optionally contain an organic solvent, water, film-forming assistant, anti-foaming agent, dispersant, cellulose substance, anti-corrosive agent, mildewcide, algacide and the like.

The heat insulating coating material used in the present invention may have a viscosity in the range of 2 to 100 Pa·s, preferably 5 to 50 Pa·s under the conditions of BROOK FIELD viscometer, 20 rpm at 20°C. A viscosity less than 2 Pa·s of the coating material may result unsatisfactory thick coating properties. A viscosity more than 100 Pa·s may reduce coating workability, may make very difficult the roller coating and spray coating, and makes it difficult to obtain a uniform uneven pattern surface.

The present invention provides a heat insulating finish coating method which comprises coating by at least one coating onto a coating substrate a heat insulating coating material obtained as above by use of a coating device (I) a porous-shaped roller or (II) a spray coating gun having a nozzle bore diameter of 0.3 to 15 mm to form a thick film having an uneven coating surface.

In the method by use of the coating device (I), the porous-shaped roller may include, for example, a roller having a roller cover prepared by dissolving a thin film portion of a base material foam such as polyurethane and the like into a caustic soda so as to remain a big cellulose net portion. The roller may include a roller for use with sand-filled texture coating, mastic roller, pattern roller, design roller, stipple design roller, moltar roller, and the like. The use of the above roller makes it possible to contain a large amount of coating material by one coating on coating, resulting in making easy a thick coating, and makes it possible to impart an uneven beautiful appearance onto a finish surface.

In the method by use of the coating device (II), the usable spray coating gun may include, for example, a universal gun, multi-purpose gun, lythin gun, tail gun, stucco gun, durack gun, airless gun and the like. A spray coating by use of the above coating gun makes possible to easily obtain a thick coating, to obtain an uneven finish surface. In the present invention, the coating gun has a nozzle bore diameter of 0.3 to 15 mm. When less than 0.3 mm, clogging of the heat insulating coating material may take place, a small unevenness on the finish surface may result poor beautiful appearance. When more than 15 mm, sagging may take place, resulting in showing poor finish properties.

In the method of the present invention, an uneven coating surface may be formed by use of the coating device (I) or (II). Immediately after coating and before drying, an uneven pattern in the coating surface may arbitrarily be controlled by use of a coating material-free roller or spatula.

In the present invention, the uneven coating surface means a coating surface showing beautiful appearance due to a visually three dimensional structure, and may include, for example, ripple-like, orange-peeled, stipple, spray tail-like, stucco-like, a pattern determined depending on the shape of the roller and the like. The uneven coating surface may impart beautiful appearance the thick-coated heat insulating coating material, and has functions such as changes in texture of an old coating film, opacifying of a substrate and the like.

A coating film thickness in the method of the present invention may be such that a dry film thickness may be in the range of 0.1 to 20 mm, preferably 0.2 to 15 mm as a mean film thickness from a coating substrate surface to a convex surface from the standpoints of heat insulating effect, formation of the uneven coating surface and the like. A film thickness less than 0.1 mm may result an unsatisfactory heat insulating properties. When more than 20 mm, applicability may become poor. A suitable degree of unevenness is such that a mean depth from a convex side to a concave side in the direction of a film thickness is 0.02 mm or more from the standpoint of a visual beautiful appearance. When less than 0.02 mm, unevenness may be poor, and beautiful appearance may also be poor.

In the method of the present invention, the method by use of the coating device (I) , or the method by use of the coating device (II) may arbitrarily be selected, or both methods may be used in combination, depending on a coating substrate surface, finish surface, coating environment and the like.

The method of the present invention is particularly useful for an external and internal walls of an architectural structure. A coating substrate surface may include a surface of a substrate, for example, concrete, mortar, slate, ceramics such as pottery, tile and the like, plastic, wood, stone, metal and the like; and a surface of an old coating film formed on the substrate from acrylic resin, acrylic urethane resin, polyurethane resin, fluorocarbon resin, silicone acrylic resin, vinyl chloride resin, vinyl acetate resin, and the like. These surfaces may arbitrarily be subjected to a substrate treatment beforehand.

In the method of the present invention, the heat insulating coating material may be coated directly onto the surface of the substrate, or a sealer or primer layer may be formed onto the surface of the substrate beforehand. The sealer and primer are optionally coated onto the surface of the substrate, and are used for the purpose of improving adhesion properties between the substrate and a heat insulating coating film, preventing efflorescence from the substrate, and the like. The sealer or primer may specifically include ones having at least one resin component selected from acrylic resin, vinyl chloride resin, vinyl acetate resin, epoxy resin, chlorinated rubber and the like. In the case where high water resistance is required on coating the sealer or primer, an additional coating may be carried out on top thereof.

The method of the present invention may form a heat insulating thick coating film showing an uneven beautiful appearance, but may optionally include a step of coating a topcoat coating composition thereonto. The topcoat coating composition may be coated for the purpose of improving gloss, weather resistance, durability, pollution resistance, heat ray reflecting properties, and the like. The topcoat coating composition may include any ones known in the art. However, in the case where a deep paint finish is required, the use of carbon black may be reduced to a minimum for the purpose of reducing absorption of heat rays from sunlight, so that a substractive color mixture formed by combining at least two color pigments and a low color value coating color formed by use of a specified black pigment may be obtained. The topcoat coating composition may be coated by a coating method such as spray coating, roller coating, brushing and the like in a coating weight in the range of 0.1 to 3 kg/m².

### Most Preferable Embodiment of the Invention:

The present invention is explained more in detail by the following Examples, in which "%" and "part" mean "% by weight" and "part by weight" respectively.

### Preparation of Heat Insulating Coating Material

### Preparation Examples 1-10

Respective formulations of components shown in Table 1 were mixed with agitation to obtain respective water based heat insulating coating material. In Table 1, (Note 1) to (Note 11) are as follows. A test piece was prepared by a method as shown in the following (*1), and was subjected to evaluation of heat insulating properties according to the following evaluation criteria.

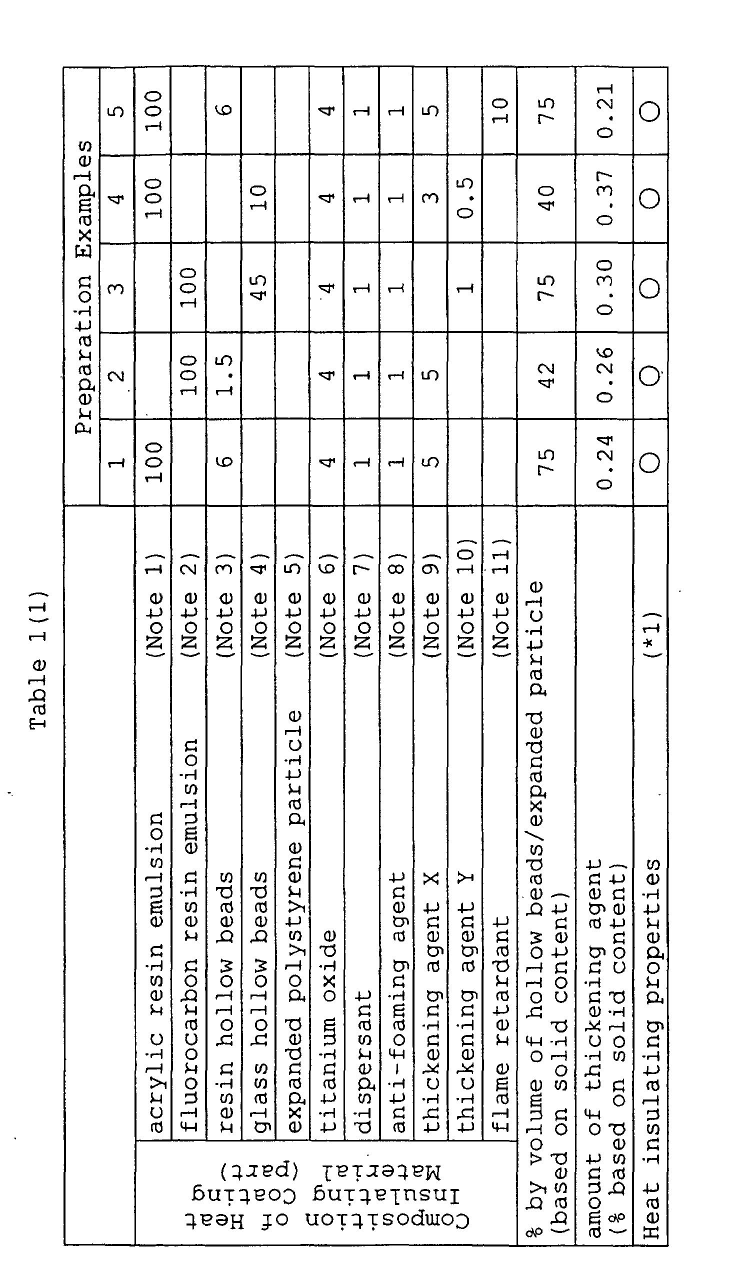

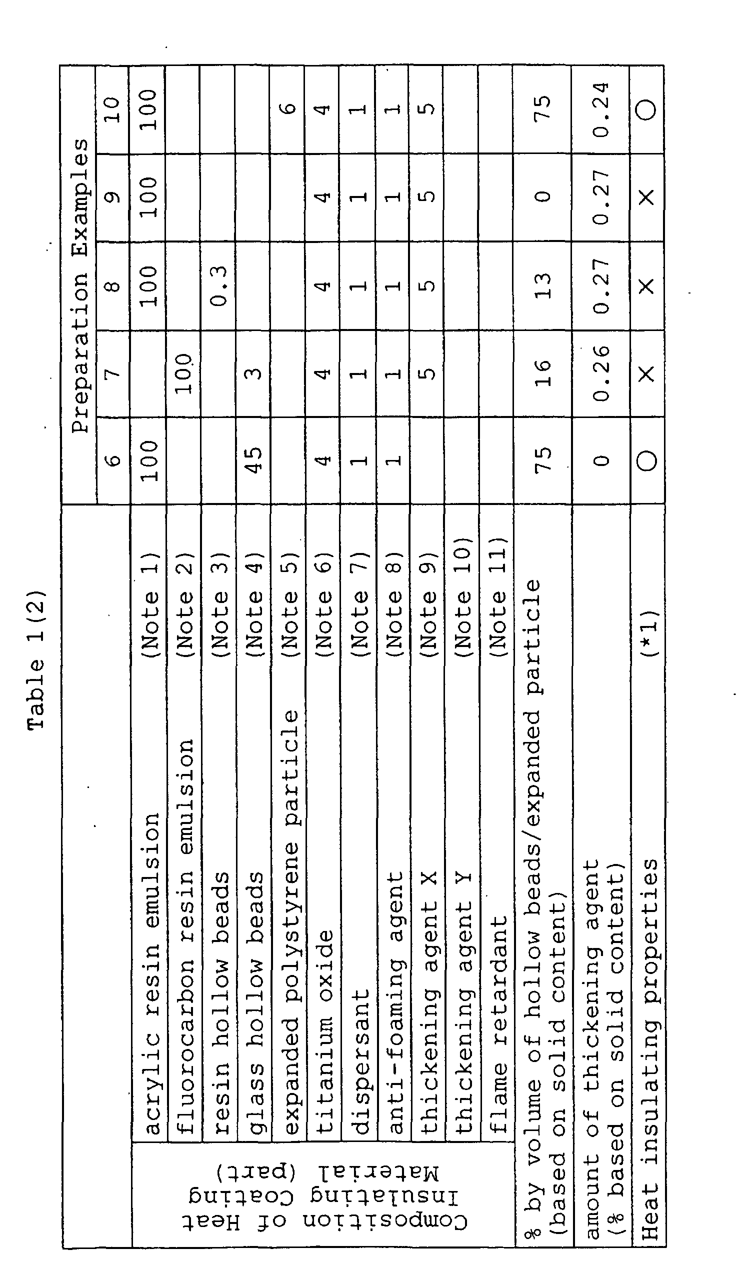

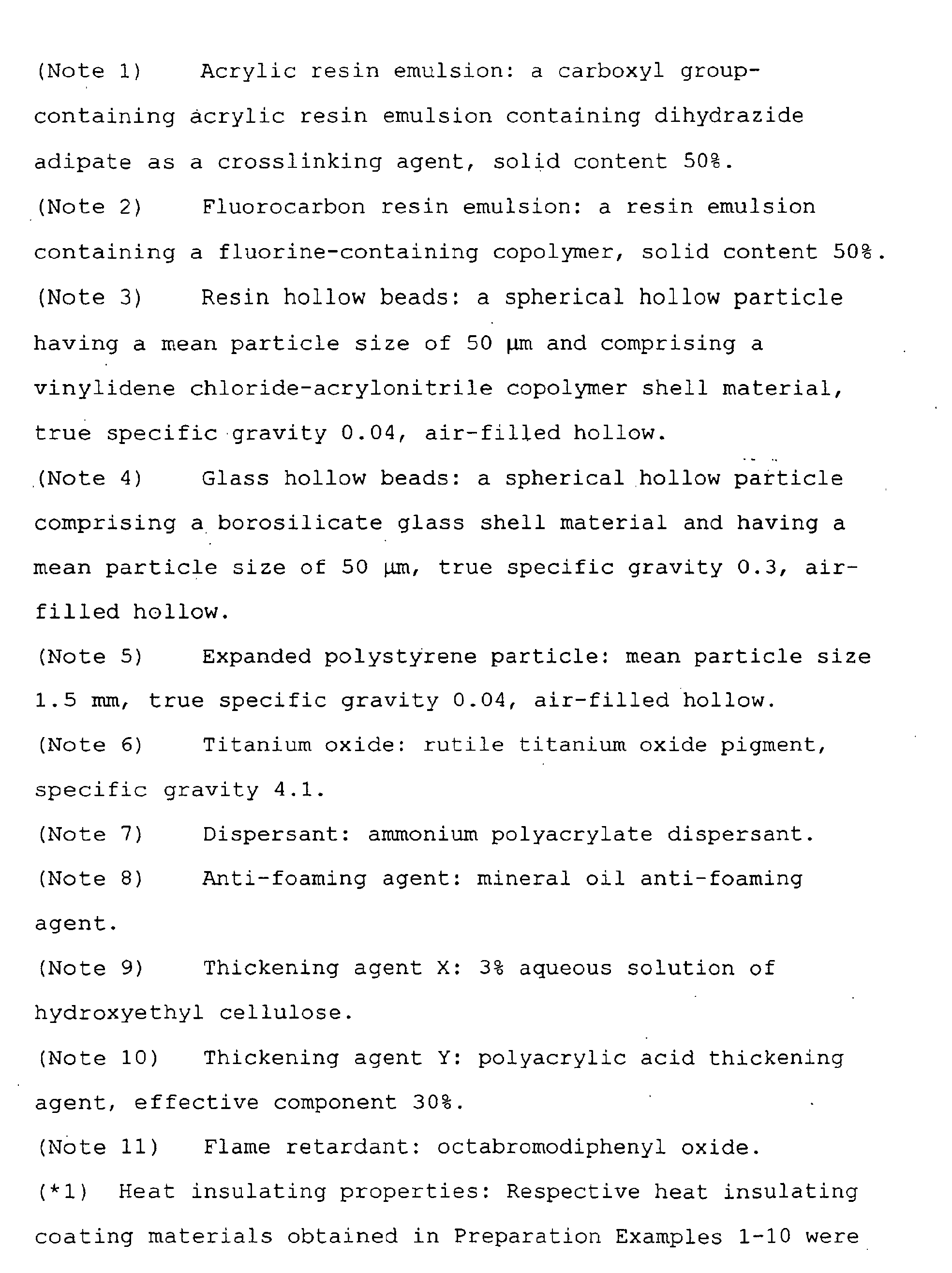

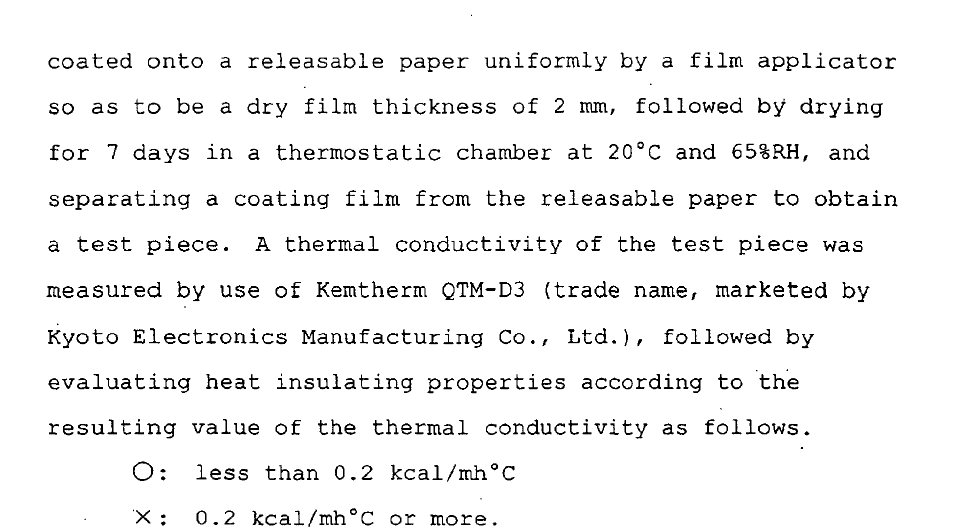

### Coating

### Examples 1-7 and Comparative Examples 1-7

EP Sealer White (trade name, marketed by Kansai Paint Co., Ltd., water based sealer) was coated onto a slate plate, followed by drying, coating respective heat insulating coating materials according to coating methods as shown in Table 2 onto the resulting dry surface by one coating, drying for 24 hours in a thermostatic chamber at 20°C·65%RH to obtain a test plate. Respective test plates were subjected to evaluations of thick coating properties, beautiful appearance and weather resistance. The test pieces of Examples 3 and 7 were subjected to evaluation of flame retardant properties. The above test plates were vertically standed, followed by contacting a candle flame onto the surface of the coating film from side for 20 seconds, and evaluating conditions just after removing the candle with the results that flame spread onto the coating film in the case of Example 3, and flame was immediately extinguished in the case of Example 7, resulting in showing good flame retardant effect.
(Note 12) Universal gun: nozzle bore diameter 5 mm.
(*1) Thick coating properties: The thick coating properties were evaluated according to a mean film thickness obtained by one coating according to respective coating methods as follows.
○: 0.2 mm or more
×: less than 0.2 mm.
(*2) Beautiful appearance: A finish surface of the test plate was visually evaluated.
○: showing beautiful appearance due to three dimensional uneven pattern.
×: showing poor beautiful appearance.
(*3) Weather resistance: Conditions of coating film were visually evaluated 250 hours after Sunshine Weather Meter accelerated test.
○: Nothing abnormal.
×: Some abnormalities such as cracking, swelling, color change, chalking and the like.

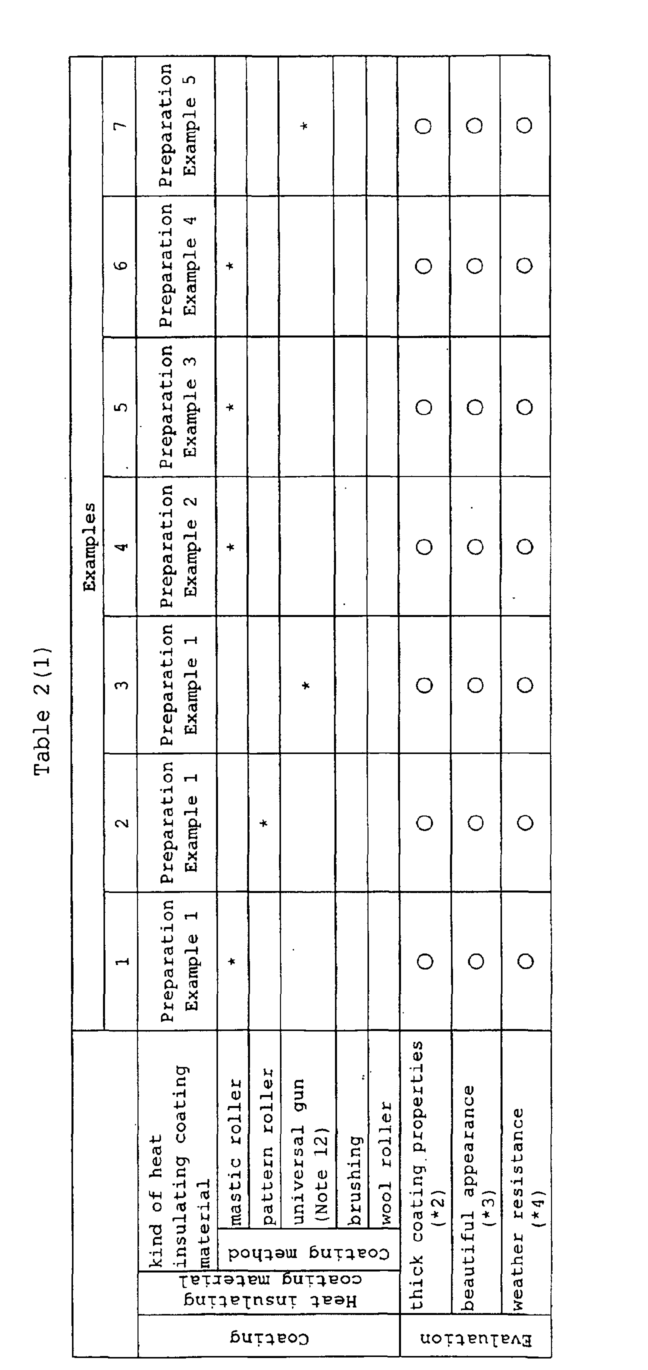

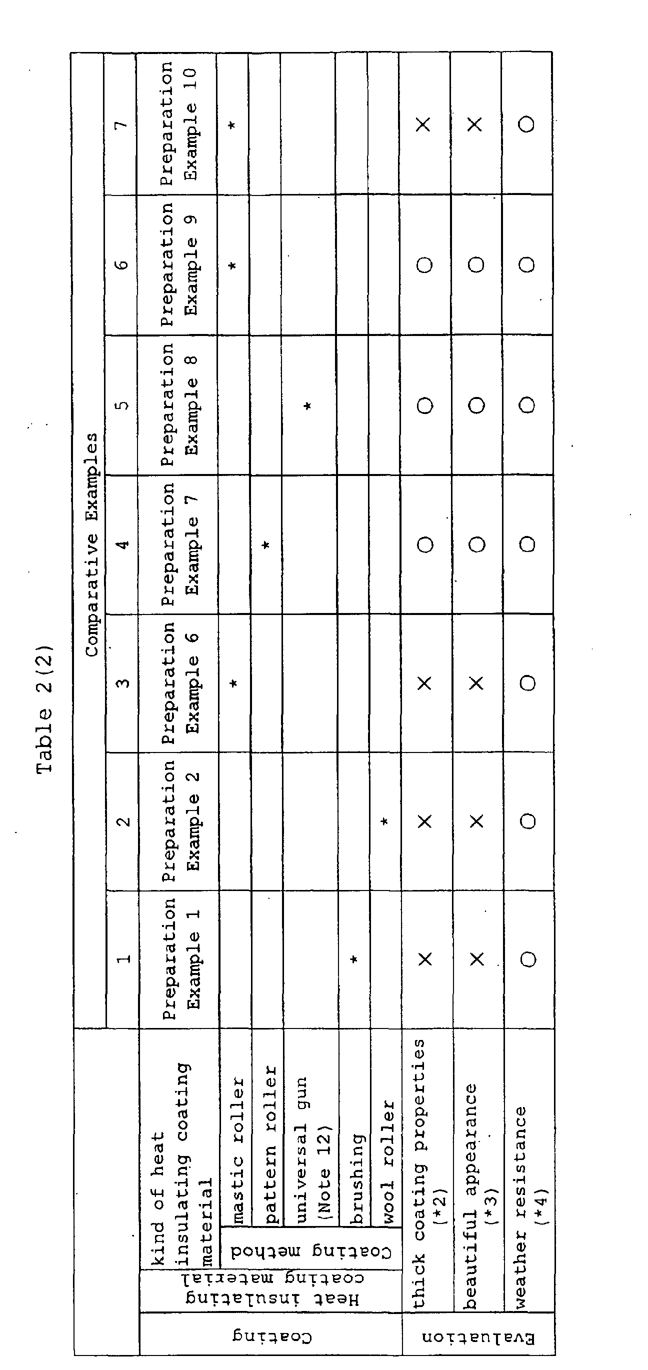

### Industrial Applicability:

According to the method of the present invention, coating of a heat insulating coating material having a specified viscosity and containing the resin emulsion, hollow beads and thickening agent by use of a porous shaped roller or specified spray coating gun makes it possible to obtain a thick coating, and to form a heat insulating coating film showing good properties in coating workability and beautiful appearance, resulting in preferably being applicable to the external and internal walls of architectural structure.

## Claims

1. A heat insulating finish coating method which comprises coating by at least one coating a heat insulating coating material by use of (I) a porous-shaped roller or (II) a spray coating gun having a nozzle bore diameter of 0.3 to 15 mm to form a thick film having an uneven coating surface, said heat insulating coating material containing (A) a resin emulsion, (B) a hollow bead having a mean particle size of 1 to 300 µm and (C) a thickening agent and having a viscosity of 2 to 100 Pa·s, said hollow bead (B) being contained in an amount of 20 to 98% by volume based on a solid content of the heat insulating coating material, said thickening agent (B) being contained in an amount of 0.01 to 5% by weight based on a solid content of the heat insulating coating material.

2. A heat insulating finish coating method as claimed in claim 1, wherein the hollow bead (B) is a resin balloon.

3. A heat insulating coating material used in the heat insulating finish coating method as claimed in claim 1 or 2.

4. A heat insulating coating material as claimed in claim 3, wherein the coating material further contains a flame retardant.
